# EUROPEAN PATENT APPLICATION

(11) **EP 4 800 646 A1**
(43) Date of publication of application: **02.09.2026**
(21) Application number: 24882750.3
(22) Date of filing: 21.10.2024
(51) Int. Cl.: G06T 7/292, G06V 20/40, G06T 7/70, G06V 10/74

(54) **METHOD AND SYSTEM FOR TRACKING MOVEMENT PATH OF OBJECT BY USING MULTIPLE CAMERAS**

(30) Priority: 27.10.2023 KR 20230146124
(71) Applicant: May-i Inc., Seoul 06194 (KR)
(72) Inventor: PARK, Jin Woo, Incheon 21363 (KR); KIM, Chankyu, Seoul 08730 (KR); KIM, Seung Chae, Seoul 04094 (KR)
(74) Representative: Berggren Oy
(86) International application number: PCT/KR2024/015950
(87) International publication number: WO 2025/089723

(57) **Abstract**

Provided is a method for tracking a movement path of an object by using multiple cameras according to an aspect of the present invention, the method comprising the steps of: determining whether an event by a target object captured by a first camera has occurred, by using a captured image of the target object; in response to determining that the event has occurred, specifying, as first information, information about a movement path of the target object at a first time point associated with the occurrence of the event; and on the basis of object identification information about the target object, associating information about a movement path of the target object at a second time point different from the first time point with the first information.

## Description

### FIELD OF THE INVENTION

The present invention relates to a method and a system for tracking a movement path of an object by using multiple cameras.

### BACKGROUND

In recent years, techniques for detecting and tracking objects in images photographed by cameras have been introduced as artificial intelligence technology has developed.

One example of related conventional techniques is a SORT (Simple Online and Realtime Tracking) technique. According to this technique, an object to be tracked is detected at a specific time point, a position of the object at a next time point is predicted using a Kalman filter, and an object identical to the object to be tracked is found among objects detected at the next time point on the basis of the predicted value, thereby making it possible to track the object.

However, in the case of tracking a large number of targets using images photographed at various places over a relatively long period of time (e.g., in the case of tracking movement paths of visitors using images photographed by multiple CCTVs installed in a large mart or a department store), there has been a problem that analyzing all of the data using the above conventional technique as well as the techniques introduced so far requires excessive computing resources.

### <PRIOR ART DOCUMENTS>

### <NON-PATENT DOCUMENTS>

(Non-Patent Document 1) Simple Online and Realtime Tracking, Bewley et al. (July 7, 2017)

### SUMMARY OF THE INVENTION

One object of the present invention is to solve all the above-described problems in prior art.

Another object of the invention is to determine whether an event caused by a target object has occurred using a photographed image of the target object photographed by a first camera, specify, as first information, information on a movement path of the target object at a first time point associated with the occurrence of the event, in response to determining that the event has occurred, and associate information on a movement path of the target object at a second time point different from the first time point with the first information, on the basis of object identification information on the target object.

Yet another object of the invention is to track a movement path of a target object using a plurality of cameras installed at a specific place, thereby providing useful information that may help in establishing a plan for operating an offline space.

Still another object of the invention is to generate information on a journey of a target object at a specific place, thereby providing useful information that may help in establishing a plan for operating an offline space.

The representative configurations of the invention to achieve the above objects are described below.

According to one aspect of the invention, there is provided a method comprising the steps of: determining whether an event caused by a target object has occurred using a photographed image of the target object photographed by a first camera; specifying, as first information, information on a movement path of the target object at a first time point associated with the occurrence of the event, in response to determining that the event has occurred; and associating information on a movement path of the target object at a second time point different from the first time point with the first information, on the basis of object identification information on the target object.

According to another aspect of the invention, there is provided a system comprising: an event management unit configured to determine whether an event caused by a target object has occurred using a photographed image of the target object photographed by a first camera, and specify, as first information, information on a movement path of the target object at a first time point associated with the occurrence of the event, in response to determining that the event has occurred; and a movement path management unit configured to associate information on a movement path of the target object at a second time point different from the first time point with the first information, on the basis of object identification information on the target object.

In addition, there are further provided other methods and systems to implement the invention, as well as non-transitory computer-readable recording media having stored thereon computer programs for executing the methods.

According to the invention, it is possible to determine whether an event caused by a target object has occurred using a photographed image of the target object photographed by a first camera, specify, as first information, information on a movement path of the target object at a first time point associated with the occurrence of the event, in response to determining that the event has occurred, and associate information on a movement path of the target object at a second time point different from the first time point with the first information, on the basis of object identification information on the target object.

According to the invention, it is possible to track a movement path of a target object using a plurality of cameras installed at a specific place, thereby providing useful information that may help in establishing a plan for operating an offline space.

According to the invention, it is possible to generate information on a journey of a target object at a specific place, thereby providing useful information that may help in establishing a plan for operating an offline space.

### BRIEF DESCRIPTION OF THE DRAWINGS

FIG. 1 schematically shows the configuration of an entire system for tracking a movement path of an object using a plurality of cameras according to one embodiment of the invention.
FIG. 2 specifically shows the internal configuration of a movement path tracking system according to one embodiment of the invention.
FIG. 3 illustratively shows tracklets according to one embodiment of the invention.

### <DESCRIPTION OF THE REFERENCE NUMERALS>

100: communication network
200: movement path tracking system
210: event management unit
220: movement path management unit
230: movement path analysis unit
240: communication unit
250: control unit
300: photographing system

### DETAILED DESCRIPTION

In the following detailed description of the present invention, references are made to the accompanying drawings that show, by way of illustration, specific embodiments in which the invention may be practiced. These embodiments are described in sufficient detail to enable those skilled in the art to practice the invention. It is to be understood that the various embodiments of the invention, although different from each other, are not necessarily mutually exclusive. For example, specific shapes, structures, and characteristics described herein may be implemented as modified from one embodiment to another without departing from the spirit and scope of the invention. Furthermore, it shall be understood that the positions or arrangements of individual elements within each embodiment may also be modified without departing from the spirit and scope of the invention. Therefore, the following detailed description is not to be taken in a limiting sense, and the scope of the invention is to be taken as encompassing the scope of the appended claims and all equivalents thereof. In the drawings, like reference numerals refer to the same or similar elements throughout the several views.

Hereinafter, various preferred embodiments of the present invention will be described in detail with reference to the accompanying drawings to enable those skilled in the art to easily implement the invention.

Meanwhile, the term "photographed image" herein should be understood as a broad concept meaning an image (i.e., a photograph or a video) having one or more frames generated by being photographed by a camera.

Further, although the description herein is mainly focused on embodiments in which a subject of movement path tracking (i.e., a target object) is a person, it should be understood that the target object according to the invention is not necessarily a person but may encompass any movable object.

### Configuration of the entire system

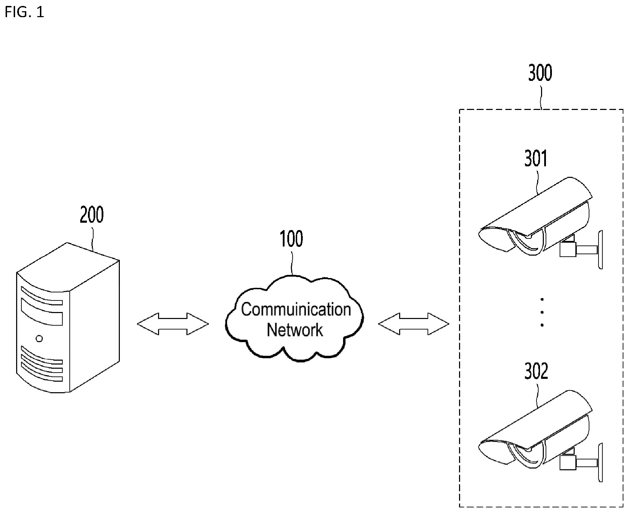

FIG. 1 schematically shows the configuration of the entire system for tracking a movement path of an object using a plurality of cameras according to one embodiment of the invention.

As shown in FIG. 1, the entire system according to one embodiment of the invention may comprise a communication network 100, a movement path tracking system 200, and a photographing system 300.

First, the communication network 100 according to one embodiment of the invention may be implemented regardless of communication modality such as wired and wireless communications, and may be constructed from a variety of communication networks such as local area networks (LANs), metropolitan area networks (MANs), and wide area networks (WANs). Preferably, the communication network 100 described herein may be the Internet or the World Wide Web (WWW). However, the communication network 100 is not necessarily limited thereto, and may at least partially include known wired/wireless data communication networks, known telephone networks, or known wired/wireless television communication networks.

For example, the communication network 100 may be a wireless data communication network, at least a part of which may be implemented with a conventional communication scheme such as WiFi communication, WiFi-Direct communication, Long Term Evolution (LTE) communication, 5G communication, Bluetooth communication (including Bluetooth Low Energy (BLE) communication), infrared communication, and ultrasonic communication. As another example, the communication network 100 may be an optical communication network, at least a part of which may be implemented with a conventional communication scheme such as LiFi (Light Fidelity).

Next, the movement path tracking system 200 according to one embodiment of the invention may function to: determine whether an event caused by a target object has occurred using a photographed image of the target object photographed by a first camera; specify, as first information, information on a movement path of the target object at a first time point associated with the occurrence of the event, in response to determining that the event has occurred; and associate information on a movement path of the target object at a second time point different from the first time point with the first information, on the basis of object identification information on the target object.

The configuration and functions of the movement path tracking system 200 according to the invention will be discussed in more detail below.

Next, the photographing system 300 according to one embodiment of the invention is equipment capable of connecting to and then communicating with the movement path tracking system 200 and capable of capturing a video, and may include a plurality of cameras 301 and 302. Here, the camera according to one embodiment of the invention may refer to a CCTV, an IP camera, and the like, but is not limited thereto. Further, the photographing system 300 according to one embodiment of the invention may encompass a recording medium for storing images photographed by a CCTV, an IP camera, and the like (e.g., a digital video recorder (DVR) or a network video recorder (NVR)).

Further, the photographing system 300 according to one embodiment of the invention may include a single-camera image analysis module (not shown) for generating various information using a photographed image of the target object photographed by a single camera 301 or 302. For example, such information may include at least one of information on a movement path of the target object in the image photographed by the single camera 301 or 302, object identification information on the target object, and demographic information on the target object (e.g., gender and age). To this end, the single-camera image analysis module according to one embodiment of the invention may employ an object recognition model that appropriately utilizes algorithms such as R-CNN (Regions with Convolutional Neural Network) and YOLO (You Only Look Once). Meanwhile, the information on the movement path of the target object and the object identification information on the target object will be described in detail below.

Meanwhile, it will be apparent to those skilled in the art that at least a part of the components or functions of the single-camera image analysis module (not shown) according to one embodiment of the invention may be implemented or included in the movement path tracking system 200 according to one embodiment of the invention, as necessary.

The photographing system 300 according to one embodiment of the invention may include an application (not shown) for assisting a user to receive services such as movement path analysis from the movement path tracking system 200. The application may be downloaded from the movement path tracking system 200 or an external application distribution server (not shown). Meanwhile, the characteristics of the application may be generally similar to those of an event management unit 210, a movement path management unit 220, a movement path analysis unit 230, a communication unit 240, and a control unit 250 of the movement path tracking system 200 to be described below. Here, at least a part of the application may be replaced with a hardware device or a firmware device that may perform a substantially equal or equivalent function, as necessary.

### Configuration of the movement path tracking system

Hereinafter, the internal configuration of the movement path tracking system 200 crucial for implementing the invention and the functions of the respective components thereof will be discussed.

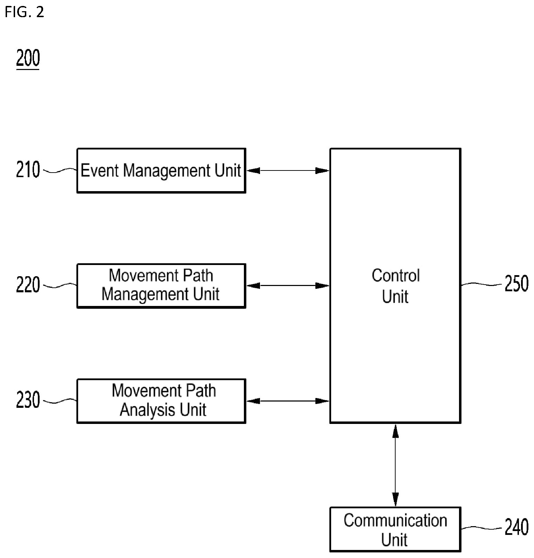

FIG. 2 specifically shows the internal configuration of the movement path tracking system 200 according to one embodiment of the invention.

As shown in FIG. 2, the movement path tracking system 200 according to one embodiment of the invention may comprise an event management unit 210, a movement path management unit 220, a movement path analysis unit 230, a communication unit 240, and a control unit 250. According to one embodiment of the invention, at least some of the event management unit 210, the movement path management unit 220, the movement path analysis unit 230, the communication unit 240, and the control unit 250 may be program modules to communicate with an external system (not shown). The program modules may be included in the movement path tracking system 200 in the form of operating systems, application program modules, or other program modules, while they may be physically stored in a variety of commonly known storage devices. Further, the program modules may also be stored in a remote storage device that may communicate with the movement path tracking system 200. Meanwhile, such program modules may include, but are not limited to, routines, subroutines, programs, objects, components, data structures, and the like for performing specific tasks or executing specific abstract data types as will be described below in accordance with the invention.

Meanwhile, the above description is illustrative although the movement path tracking system 200 has been described as above, and it will be apparent to those skilled in the art that at least a part of the components or functions of the movement path tracking system 200 may be implemented in the photographing system 300 or a server (not shown) or included in an external system (not shown), as necessary.

First, the event management unit 210 according to one embodiment of the invention may function to determine whether an event caused by a target object has occurred using a photographed image of the target object photographed by a first camera.

Specifically, the event management unit 210 according to one embodiment of the invention may determine whether to specifically track a movement path of the target object depending on whether an event caused by the target object has occurred. That is, when it is determined that an event caused by the target object has occurred, the event management unit 210 according to one embodiment of the invention may start specifically tracking the movement path of the target object. According to one embodiment of the invention, the target object entering a store or purchasing (or paying for) some item at the store may correspond to the occurrence of such an event. However, the occurrence of the event according to one embodiment of the invention is not limited to the foregoing but may be diversely changed as long as the objects of the invention may be achieved.

More specifically, the event management unit 210 according to one embodiment of the invention may determine whether the event has occurred on the basis of position information of the target object. According to one embodiment of the invention, the position information of the target object may be generated by recognizing the target object using the image photographed by the first camera, or, in addition thereto, by detecting any action that may reveal the position of the target object (e.g., the target object scanning a QR code displayed at a specific position, or the target object purchasing (or paying for) an item at a store). The event management unit 210 according to one embodiment of the invention may appropriately utilize the single-camera image analysis module (not shown) to recognize the target object using the photographed image.

For example, the event management unit 210 according to one embodiment of the invention may determine that the event has occurred in response to determining that the target object has crossed a predetermined line (which may refer to a virtual line) or has visited a predetermined area.

More specifically, for example, the event management unit 210 according to one embodiment of the invention may determine that the event has occurred when the target object is recognized at a specific position in the image photographed by the first camera. In this case, the event management unit 210 according to one embodiment of the invention may also determine that the event has occurred when the target object is continuously recognized (i.e., the target object stays) at the specific position for a predetermined time.

As another example, the event management unit 210 according to one embodiment of the invention may determine that the event has occurred when the target object recognized in the image photographed by the first camera passes through a specific position. In this case, the event management unit 210 according to one embodiment of the invention may also consider a movement line or a direction in which the target object passes through the specific position. For example, assuming that there are an area A and an area B distinguished from each other with respect to a virtual line (i.e., a specific position), it may be determined that the event has occurred when the target object passes through the specific position by moving from the area A to the area B, and it may be determined that the event has not occurred (in some cases, the event that has occurred has terminated or expired) when the target object passes through the specific position by moving from the area B to the area A.

Meanwhile, the event management unit 210 according to one embodiment of the invention may determine whether the event caused by the target object has occurred using a photographed image of the target object photographed by the first camera and a photographed image of the target object photographed by another camera, which is installed at a position different from that of the first camera but photographs a place at least partially overlapping the place photographed by the first camera, so that the accuracy of the determination may be enhanced.

Further, the event management unit 210 according to one embodiment of the invention may specify, as first information, information on a movement path of the target object at a first time point associated with the occurrence of the event caused by the target object, in response to determining that the event has occurred.

Specifically, according to one embodiment of the invention, the information on the movement path of the target object at the first time point associated with the occurrence of the event caused by the target object may refer to information on the movement path of the target object at the first time point (i.e., in a single frame) or during the first time points (i.e., in a plurality of frames), wherein the frame(s) serving as the basis for the event management unit 210 according to one embodiment of the invention to determine that the event caused by the target object has occurred are photographed at the time point(s). In other words, the time point herein (which may include not only the first time point but also a second time point and a third time point to be described below) may refer to a time at which a photographed image composed of one or more frames is photographed.

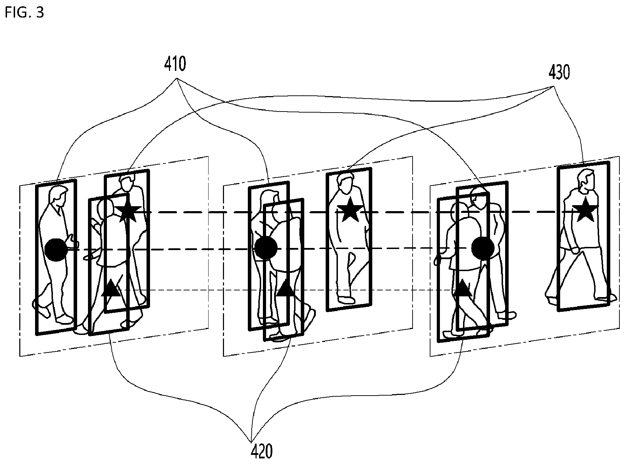

According to one embodiment of the invention, the information on the movement path of the target object may be managed in the form of a tracklet, but is not limited thereto. FIG. 3 illustratively shows tracklets 410, 420 and 430 according to one embodiment of the invention. Referring to FIG. 3, the tracklets 410, 420 and 430 according to one embodiment of the invention may refer to a set (or array) in which information on detection results for the same object (e.g., information on bounding boxes) is collected in chronological order. As shown in FIG. 3, a plurality of tracklets 410, 420 and 430 may exist for each of the same objects (where objects indicated by figures of the same shape refer to the same object). Of course, according to one embodiment of the invention, only one tracklet may exist. Further, although FIG. 3 shows that information on a plurality of bounding boxes is included in one tracklet, it is also possible that only information on one bounding box is included in one tracklet in some cases.

Meanwhile, the movement path management unit 220 according to one embodiment of the invention may acquire information on a movement path of the target object at a specific time point (including the first time point to the third time point), which will be described in detail below.

Next, the movement path management unit 220 according to one embodiment of the invention may function to associate information on a movement path of the target object at a second time point, which is different from the first time point associated with the occurrence of the event, with the first information specified by the event management unit 210 according to one embodiment of the invention, on the basis of object identification information on the target object.

Specifically, the movement path management unit 220 according to one embodiment of the invention may acquire the information on the movement path of the target object at the second time point different from the first time point, using a photographed image of the target object photographed by a second camera different from the first camera. The event management unit 210 according to one embodiment of the invention may appropriately utilize the single-camera image analysis module (not shown) to recognize the target object and acquire the information on the movement path using the photographed image of the target object photographed by the second camera.

Here, according to one embodiment of the invention, the second time point may refer to at least a part of time points from immediately after the first time point associated with the occurrence of the event to a time point associated with the termination or expiration of the event that has occurred. For example, the first time point associated with the occurrence of the event may be a time point at which it is determined that the target object has entered a store, and the time point associated with the termination or expiration of the event may be a time point at which it is determined that the target object has exited the store.

Further, the movement path management unit 220 according to one embodiment of the invention may function to associate the information on the movement path of the target object at the second time point with the first information specified by the event management unit 210 according to one embodiment of the invention, on the basis of the object identification information on the target object.

Specifically, according to one embodiment of the invention, the object identification information on the target object may be obtained by storing information on external features of the target object in the form of an image tensor. The movement path management unit 220 according to one embodiment of the invention may appropriately utilize the single-camera image analysis module (not shown) to acquire the object identification information on the target object.

The movement path management unit 220 according to one embodiment of the invention may determine whether the movement path of the target object at the first time point associated with the occurrence of the event and the movement path of the target object at the second time point correspond to a movement path of the same object, on the basis of the object identification information on the target object. Further, when it is determined that the above movement paths correspond to the movement path of the same object, the movement path management unit 220 according to one embodiment of the invention may associate the information on the movement path of the target object at the second time point with the first information (e.g., make them into one tracklet), so that information on an overall movement path of the target object is generated.

For example, the movement path management unit 220 according to one embodiment of the invention may calculate a level of similarity between first object identification information acquired on the basis of a photographed image of the target object at the first time point and second object identification information acquired on the basis of a photographed image of the target object at the second time point. According to one embodiment of the invention, a similarity calculation method such as a cosine distance or Euclidean distance may be used to calculate the level of similarity, but is not limited thereto. Further, in response to the calculated level of similarity being not less than a threshold value (i.e., in response to determining that the target object at the first time point and the target object at the second time point are the same object), the movement path management unit 220 according to one embodiment of the invention may associate the information on the movement path of the target object at the second time point with the first information.

Meanwhile, the movement path management unit 220 according to one embodiment of the invention may determine whether information on a movement path of a specific object at a third time point different from the first time point and the second time point relates to re-occurrence of the event caused by the target object.

Specifically, according to one embodiment of the invention, it may be assumed that the target object visiting a predetermined area is determined as the occurrence of an event. In this case, when the target object visits the area two or more times, each visit may be determined as the occurrence of an event. This may cause a situation in which information that should be managed as information on a movement path of the same object is managed as information on movement paths of different objects. For example, information that should be managed as one tracklet may be managed as a plurality of tracklets. In this case, in response to determining that the information on the movement path of the specific object at the third time point relates to the re-occurrence of the event caused by the target object, the movement path management unit 220 according to one embodiment of the invention may associate the information on the movement path of the specific object with the first information. This may prevent information on a movement path of one target object from being separated into and managed as a plurality of pieces.

Meanwhile, in order to determine whether the information on the movement path of the specific object at the third time point relates to the re-occurrence of the event caused by the target object, the movement path management unit 220 according to one embodiment of the invention may calculate a level of similarity between the first object identification information acquired on the basis of the photographed image of the target object at the first time point and third object identification information acquired on the basis of a photographed image of the target object at the third time point. According to one embodiment of the invention, a similarity calculation method such as a cosine distance or Euclidean distance may be used to calculate the level of similarity, but is not limited thereto. Further, in response to the calculated level of similarity being not less than a threshold value (i.e., in response to determining that the target object at the first time point and the specific object at the third time point are the same object), the movement path management unit 220 according to one embodiment of the invention may associate the information on the movement path of the specific object at the third time point with the first information.

Next, the movement path analysis unit 230 according to one embodiment of the invention may calculate a level of accuracy of information on an overall movement path of the target object that is generated as the information on the movement path of the target object at the second time point is associated with the first information as described above.

Specifically, the movement path analysis unit 230 according to one embodiment of the invention may calculate a level of accuracy indicating a likelihood that the information on the overall movement path of the target object generated as above actually relates to a movement path of a single object. Further, in response to the calculated level of accuracy being not less than a threshold value, the movement path analysis unit 230 according to one embodiment of the invention may function to determine the information on the overall movement path of the target object as information to be analyzed.

Here, according to one embodiment of the invention, the overall movement path of the target object may refer to a movement path from immediately after the first time point associated with the occurrence of the event to a time point associated with the termination or expiration of the event that has occurred. For example, the first time point associated with the occurrence of the event may be a time point at which it is determined that the target object has entered a store, and the time point associated with the termination or extinction of the event may be a time point at which it is determined that the target object has exited the store.

Further, the movement path analysis unit 230 according to one embodiment of the invention may generate information on a journey of the target object at a store, on the basis of the determined information to be analyzed and information on purchases of the target object at the store. Here, according to one embodiment of the invention, it should be understood that the store may refer to one large space such as a department store or a large mart, and may also refer to any one of several individual stores included in such a large space.

According to one embodiment of the invention, the information on the journey of the target object may refer to information obtained by combining information on a movement path of the target object at the store and information on items or services that the target object purchases or shows interest in while moving along the movement path. The movement path analysis unit 230 according to one embodiment of the invention may visualize and provide the information on the journey of the target object to a user. Of course, since there may be a plurality of target objects, information on journeys of all target objects determined to have caused events may be comprehensively visualized and provided.

Next, the communication unit 240 according to one embodiment of the invention may function to enable data transmission/reception from/to the event management unit 210, the movement path management unit 220, and the movement path analysis unit 230.

Lastly, the control unit 250 according to one embodiment of the invention may function to control data flow among the event management unit 210, the movement path management unit 220, the movement path analysis unit 230, and the communication unit 240. That is, the control unit 250 according to one embodiment of the invention may control data flow into/out of the movement path tracking system 200 or data flow among the respective components of the movement path tracking system 200, such that the event management unit 210, the movement path management unit 220, the movement path analysis unit 230, and the communication unit 240 may carry out their particular functions, respectively.

The embodiments according to the invention as described above may be implemented in the form of program instructions that can be executed by various computer components, and may be stored on a computer-readable recording medium. The computer-readable recording medium may include program instructions, data files, and data structures, separately or in combination. The program instructions stored on the computer-readable recording medium may be specially designed and configured for the present invention, or may also be known and available to those skilled in the computer software field. Examples of the computer-readable recording medium include the following: magnetic media such as hard disks, floppy disks and magnetic tapes; optical media such as compact disk-read only memory (CD-ROM) and digital versatile disks (DVDs); magneto-optical media such as floptical disks; and hardware devices such as read-only memory (ROM), random access memory (RAM) and flash memory, which are specially configured to store and execute program instructions. Examples of the program instructions include not only machine language codes created by a compiler, but also high-level language codes that can be executed by a computer using an interpreter. The above hardware devices may be changed to one or more software modules to perform the processes of the present invention, and vice versa.

Although the present invention has been described above in terms of specific items such as detailed elements as well as the limited embodiments and the drawings, they are only provided to help more general understanding of the invention, and the present invention is not limited to the above embodiments. It will be appreciated by those skilled in the art to which the present invention pertains that various modifications and changes may be made from the above description.

Therefore, the spirit of the present invention shall not be limited to the above-described embodiments, and the entire scope of the appended claims and their equivalents will fall within the scope and spirit of the invention.

## Claims

1. A method for tracking a movement path of an object using a plurality of cameras, the method comprising the steps of:
determining whether an event caused by a target object has occurred using a photographed image of the target object photographed by a first camera;
specifying, as first information, information on a movement path of the target object at a first time point associated with the occurrence of the event, in response to determining that the event has occurred; and
associating information on a movement path of the target object at a second time point different from the first time point with the first information, on the basis of object identification information on the target object.

2. The method of Claim 1, wherein in the determining step, whether the event has occurred is determined on the basis of position information of the target object.

3. The method of Claim 2, wherein in the determining step, it is determined that the event has occurred in response to determining that the target object has crossed a predetermined line or has visited a predetermined area.

4. The method of Claim 1, wherein the information on the movement path of the target object at the second time point is acquired using a photographed image of the target object photographed by a second camera different from the first camera.

5. The method of Claim 1, wherein the associating step comprises the steps of:
calculating a level of similarity between first object identification information acquired on the basis of a photographed image of the target object at the first time point and second object identification information acquired on the basis of a photographed image of the target object at the second time point; and
in response to the calculated level of similarity being not less than a threshold value, associating the information on the movement path of the target object at the second time point with the first information.

6. The method of Claim 1, further comprising the steps of:
determining whether information on a movement path of a specific object at a third time point different from the first time point and the second time point relates to re-occurrence of the event caused by the target object; and
in response to determining that the information on the movement path of the specific object relates to the re-occurrence of the event caused by the target object, associating the information on the movement path of the specific object with the first information.

7. The method of Claim 1, further comprising the steps of:
calculating a level of accuracy of information on an overall movement path of the target object that is generated as the information on the movement path of the target object at the second time point is associated with the first information; and
in response to the calculated level of accuracy being not less than a threshold value, determining the information on the overall movement path as information to be analyzed.

8. The method of Claim 7, wherein the information to be analyzed relates to a movement path at a store, and
wherein the method further comprises the step of generating information on a journey of the target object at the store, on the basis of the information to be analyzed and information on purchases of the target object at the store.

9. A non-transitory computer-readable recording medium having stored thereon a computer program for executing the method of Claim 1.

10. A system for tracking a movement path of an object using a plurality of cameras, the system comprising:
an event management unit configured to determine whether an event caused by a target object has occurred using a photographed image of the target object photographed by a first camera, and specify, as first information, information on a movement path of the target object at a first time point associated with the occurrence of the event, in response to determining that the event has occurred; and
a movement path management unit configured to associate information on a movement path of the target object at a second time point different from the first time point with the first information, on the basis of object identification information on the target object.

11. The system of Claim 10, wherein the event management unit is configured to determine whether the event has occurred on the basis of position information of the target object.

12. The system of Claim 11, wherein the event management unit is configured to determine that the event has occurred in response to determining that the target object has crossed a predetermined line or has visited a predetermined area.

13. The system of Claim 10, wherein the movement path management unit is configured to acquire the information on the movement path of the target object at the second time point using a photographed image of the target object photographed by a second camera different from the first camera.

14. The system of Claim 10, wherein the movement path management unit is configured to:
calculate a level of similarity between first object identification information acquired on the basis of a photographed image of the target object at the first time point and second object identification information acquired on the basis of a photographed image of the target object at the second time point; and
in response to the calculated level of similarity being not less than a threshold value, associate the information on the movement path of the target object at the second time point with the first information.

15. The system of Claim 10, wherein the movement path management unit is configured to:
determine whether information on a movement path of a specific object at a third time point different from the first time point and the second time point relates to re-occurrence of the event caused by the target object; and
in response to determining that the information on the movement path of the specific object relates to the re-occurrence of the event caused by the target object, associate the information on the movement path of the specific object with the first information.

16. The system of Claim 10, further comprising a movement path analysis unit configured to:
calculate a level of accuracy of information on an overall movement path of the target object that is generated as the information on the movement path of the target object at the second time point is associated with the first information; and
in response to the calculated level of accuracy being not less than a threshold value, determine the information on the overall movement path as information to be analyzed.

17. The system of Claim 16, wherein the information to be analyzed relates to a movement path at a store, and
wherein the movement path analysis unit is configured to generate information on a journey of the target object at the store, on the basis of the information to be analyzed and information on purchases of the target object at the store.
